# EUROPEAN PATENT SPECIFICATION

(11) **EP 0 950 639 B1**
(45) Date of publication and mention of the grant of the patent: **08.08.2001**
(21) Application number: 98301955.5
(22) Date of filing: 16.03.1998
(51) Int. Cl.: C02F 1/52, B01D 37/03, B01D 33/80

(54) **An apparatus and method for purifying water**
Apparat und Methode zum Reinigen von Wasser
Appareil et méthode pour la purification de l'eau

(43) Date of publication of application: 20.10.1999
(73) Proprietor: SDL Technologies Ltd, Ashdod 77166 (IL)
(72) Inventor: Sharir, Eitan, Rishon Le Zion 75415 (IL)
(74) Representative: Schlich, George William

(56) References cited:
- EP-A- 0 413 946
- GB-A- 2 069 858
- US-A- 4 869 784

## Description

The present invention relates to an apparatus and method for purifying water.

More particularly, the present invention refers to the low-cost, multi-stage clarification of sewage and potable water and provides a solution to the problem of filter clogging, enabling continuous operation of said apparatus.

With the growth of human population and the increasing scarcity of fresh water, much effort has been devoted to the development of methods and apparatus for the purification of water which is unfit for irrigation, industry or domestic consumption. Said purification efforts are usually directed to sea water, brackish water, or sewage effluent.

While contaminated fresh water is not available in as unlimited quantities as is sea water, the purification thereof can be accomplished at lower cost, as suspended solids are more easily removed therefrom than are the 3.5% dissolved salts which are present in sea water. Furthermore, there are few locations where sewage effluent may be discharged without causing some pollution problem. A plant effectively treating such effluent will produce usable water along with a fertilizer or animal feed product, and will prevent the pollution of ground water or of the seashore.

Clarification, the first step in a waste water purification process, usually requires at least one filtering step. Filters which are in intensive use must either be periodically cleaned or replaced to prevent clogging. Replacement is a viable option in applications where only small quantities of solids are removed, for example, in oil filters used in industrial and automotive applications. However, filter cleaning is required in large scale applications, such as water purification. Even if a cheap, abundant filter medium such as sand is used, its replacement is labour-intensive, and there exists a disposal problem for the contaminated medium. Furthermore, the filtered solid may have some value, either as is or after further processing, but said value is lost with disposal of the filter medium.

A common method of cleaning filters is to stop the filtering process and remove the filter for washing or processing through chemical or ultrasonic means.

Another method of cleaning filters involves the periodic reversal of filter flow, to dislodge and remove the accumulated sludge. Compressed air may be used for the same purpose, causing bubbling and discharge of solid particles into the fluid stream.

Settling tanks have the advantages of being non- clogging and requiring the least amount of energy for their operation, but such tanks require large land areas to be effective for all but the largest particles, and the process eventually has to be stopped to clear the tank. Settling tanks are not suitable for the removal of small particles, unless said particles are much heavier than the fluid from which they are to be removed.

Centrifuges, while considerably more costly to build and operate than settling tanks, are used to achieve filtering in a smaller land area than is possible with said tanks. Heavier than water solids are acted upon by centrifugal force; the solids press on the perforated centrifuge bowl wall which is lined with a filter medium, and the clarified water is withdrawn from the bowl centre. The filter, however, frequently becomes clogged and needs replacement or cleaning.

The above-mentioned methods also suffer from the disadvantages that continuous water clarification is not achieved, and that large machines, such as air compressors and pumps using considerable energy for their operation, are required to achieve filter clearing.

It is one object of the present invention to provide an apparatus and a method for purification of waste or potable water, wherein continuous operation is achieved and the problem of filter clogging is avoided.

It is a further object of the present invention to provide an apparatus for the purification of waste water which is operated by machinery of moderate size, is reliable in operation, conserves energy, and may be constructed and operated at moderate cost.

The present invention achieves the above objectives by providing a multi-stage apparatus for continuous waste water filtration, comprising: a first tank provided with a waste water inlet pipe to supply waste water containing suspended solids to said tank, means for adding a coagulant to said waste water and an outlet pipe;
a second tank receiving said mixture of waste water and coagulant from the outlet pipe, said second tank being sufficiently large to allow larger suspended solids to settle and being provided with a lower, openable port for discharge of said settled solids and having an upper weir for discharge of partially-cleared water;
a continuously-driven, non-taut perforated belt, having a surface positioned to receive, at a first location, a stream of said discharged, partially-cleared water, the belt perforations being sized to enable the passage of clear water therethrough while retaining fine and coagulated solids on said surface for subsequent discharge at a second location, and said belt being non-taut to form a trough for retaining a body of water above the surface thereof;
a load sensor in contact with said belt to determine the combined weight of said belt and the water retained thereon and to control a motor of said belt and the speed thereof as a function of said weight, whereby a microcake of less than 1 mm thickness of fine and coagulated solids is formed and retained on the surface of said belt thereby improving the filtering capacity of said belt;
a water collection body being provided under said first location for water passing through said belt perforations, and a solids collection bin being provided at said second location, for collection of particles falling off said belt at said second location.

In a preferred embodiment of the present invention, there is provided a multi-stage apparatus for continuous waste water filtration as described above, wherein said second tank has the form of an inverted truncated prism.

In a most preferred embodiment of the present invention, there is provided a multi-stage apparatus for continuous waste water filtration as described above, wherein said perforated belt passes through a water bath at said second location.

In a specially preferred embodiment of the present invention, there is provided a multi-stage apparatus for continuous waste water filtration wherein said second tank is further provided with a skimmer for removing floating, suspended solids from the surface of water contained therein.

In other preferred embodiments of the present invention, said multi-stage apparatus further comprises a metering pump to mix a coagulant into waste water introduced into said first tank, said tank being also provided with an impeller immersed in said waste water.

The invention also provides a method for continuous waste water filtration, comprising the following steps:
(a) feeding waste water containing suspended solids into a first tank;
(b) adding a coagulant to said waste water;
(c) mixing the coagulant into said waste water in said first tank;
(d) feeding the resultant mixture into a sloped-bottom second tank;
(e) periodically discharging accumulated solids from said second tank by opening a lower door therein;
(f) arranging the partially-cleared water to overflow an upper weir of said second tank, so as to fall onto a perforated continuously-driven, non-taut perforated belt, having a surface positioned to receive, at a first location, a stream of said discharged, partially-cleared water, the belt perforations being sized to enable the passage of clear water therethrough while retaining fine and coagulated solids on said surface for subsequent discharge at a second location, and said belt being non-taut to form a trough for retaining a body of water above the surface thereof;
(g) providing a load sensor in contact with said belt to determine the combined weight of said belt and the water retained thereon and to control a motor of said belt and the speed thereof as a function of said weight, whereby a microcake of less than 1 mm thickness of fine and coagulated solids is formed and retained on the surface of said belt thereby improving the filtering capacity of said belt;
(h) collecting water which has been filtered by said moving belt; and
(i) removing solid particles from the surface and perforations of said moving belt..

In a preferred embodiment of the present invention said body of water has a depth of between 2 cm and 10 cm at its area of greatest depression.

In an especially preferred embodiment of the present invention said microcake is maintained at a thickness of about 0.04 to 0.06 mm.

It will thus be realized that the novel apparatus and method of the present invention results in the formation of a thin layer of a microcake formed from the fine and coagulated solids which are retained on the surface said moving belt thereby improving the filtering quality of the system due to the partial clogging of the belt by the coagulated floc.

In U. S. Patent No. 5,178,173 to Kerlin et al., U. S. Patent No. 5,080,806 to Balzano, U. S. Patent No 3,959,133 to Fulton, and British Patent No. 2,172,216 there are described a sequence of coagulation/flocculation settling and filtration, however these references do not teach or suggest a filtration step being performed by a belt filter.

In U. S. Patent No. 3,537,584 to MacDonald and U. S. Patent No. 2,.173,256 to Jordan there are described belt filters however said references do not teach or suggest a continuously-driven, non-taut perforated belt, having a surface positioned to receive, at a first location, a stream of discharged, partially-cleared water, the belt perforations being sized to enable the passage of clear water therethrough while retaining fine and coagulated solids on said surface for subsequent discharge at a second location, and said belt being non-taut to form a trough for retaining a body of water above the surface thereof in combination with a load sensor in contact with said belt to determine the combined weight of said belt and the water retained thereon and to control a motor of said belt and the speed thereof as a function of said weight, whereby a microcake of less than 1 mm thickness of fine and coagulated solids is formed and retained on the surface of said belt thereby improving the filtering capacity of said belt.

A complete system for water purification contains additional components such as storage ponds for use as buffers, facilities for drying and processing solid wastes, a chlorination station, and additional optional facilities such as injectors for adding oxygen to the water, a device for softening the water by the cold lime process, and other equipment required for compliance with the particular water quality standards in force, depending on the purpose for which the processed water is required. Such components are known in the art, and are not part of the present invention.

In U.S. Patent 5,167,821 there is disclosed a method for thickening and dewatering slurry sludge, including the steps of adding a coagulant to the sludge, stirring the resulting mixture, filtering the flock on a moving filtering bed, removing filtrate, cleaning the filter bed by means of a spray, and removing flock from the belt by means of a scraper.

U.S. Patents 4,707,272; 4,358,381; 4,078129; 4,110,209; 4,309,291 and 2,361,283 all describe methods of filtering slurries and purification of waste water; however, said patents neither teach nor suggest the specific method and apparatus of the present invention.

The invention will now be described in connection with certain preferred embodiments with reference to the following illustrative figures so that it may be more fully understood.

With specific reference now to the figures in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention.
In the drawings:
Figure 1 is a diagrammatic view of a preferred embodiment of the apparatus according to the invention;
Figure 2 is a diagrammatic view of the belt speed control system used in the same embodiment;
Figure 3 is an enlarged view of the perforated belt as it appears in a first location;
Figure 4 is an enlarged view of the perforated belt as it appears in a second location;
Figure 5 is a diagrammatic view of a truncated, prismatic tank used for separation of larger solids;
Figure 6 is a sectioned, front view of the perforated belt, provided with various cleaning means;
Figure 7 is a diagrammatic view of an apparatus arranged to produce high quality water, and
Figure 8 is a diagrammatic view of a second tank, provided with a skimmer for removing floating solids

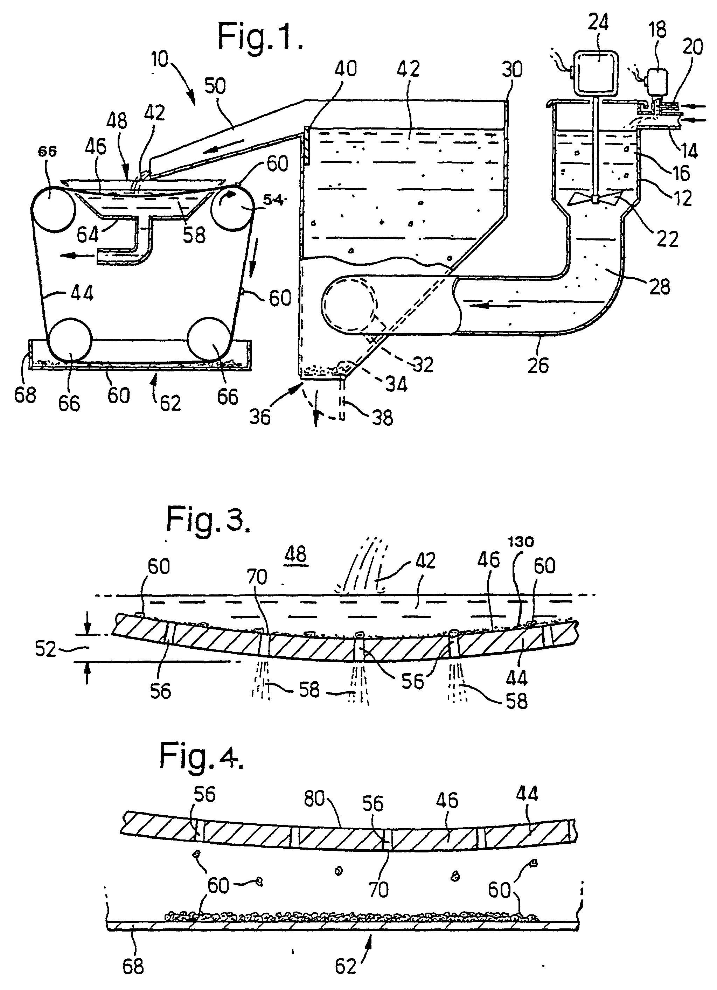

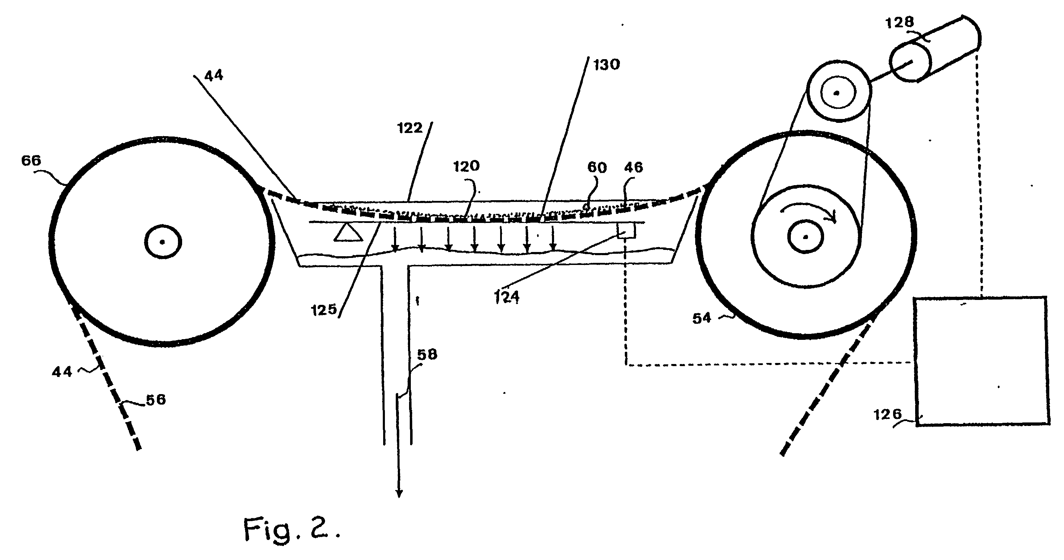

There is seen in Figure 1 a multi-stage apparatus 10 for continuous waste water filtration.

A first tank 12 is provided with a waste water inlet pipe 14 arranged to supply thereto waste water 16 containing suspended solids. First tank 12 is further provided with a metering pump 18 to mix coagulant 20 into the waste water 16 introduced therein. Addition of the coagulant 20 enhances the efficiency of operation of the following stages.

Coagulant 20 may suitably be selected from the group consisting of alum, ferric chloride, ferric sulfate, ferrous sulfate, TiO₂, lime, and polyacrylates such as cationic PAM, cationic polyamine, cationic resin amine and anionic PAM.

First tank 12 is provided with an impeller 22 immersed in the waste water 16, sufficient power being applied to impeller 22 by motor 24 to ensure even distribution of the coagulant 20. Tank 12 is provided with outlet pipe 26 for feeding the resultant mixture 28 to the next stage.

A second tank 30 receives mixture 28 from a long distributor outlet 32 fitted to the end of outlet pipe 26. Tank 30 is sufficiently large to allow settling of the larger solids 34. At least one lower, openable port 36 is provided for periodic, short-time discharge of these solids 34, together with a limited volume of mixture 28. The weight of mixture 28 pressing on solids 34 facilitates the discharge through port 36, as well as flushing of door 38, which covers port 36. It is important to note that the discharge action is achieved using only the small amount of energy required for the opening and closing of the door 38.

Tank 30 has an upper weir 40 for discharge of partially-cleared water 42. Such discharge could be alternatively achieved through an outlet port or screen, however, the weir 40 has the important advantage of being uncloggable and yet tends to restrain floating solids and prevent their discharge to the next stage, provided that moderate flow rates are used.

A continuously driven, perforated belt 44 has a surface 46 positioned to receive at a first location 48 a stream of discharged partially cleared water 42. The water 42 may come directly from the weir 40, but in the embodiment shown, a fluid flow channel 50 is provided for this purpose.

Advantageously, belt 44 is driven by pulley 54 in the direction shown, resulting in belt sag 52 at the first location 48. The water 42 being discharged onto the belt 44 at the first location 48 will thus be held and filtered over a large belt area.

As seen more clearly in Figure 2, the belt 44 is non-taut and forms a trough 120 for retaining a body of water 122 above the surface 46. A load sensor 124 is in contact with the belt 44 and determines the combined weight of part of the belt 44 and the body of water 122 retained thereon, as well as any solids 60 on the belt 44. Sensor 124 is functionally connected to a motor controller 126, which sets the speed of a motor 128 as a function of such weight. Motor speed is thus arranged to suit the formation of a microcake 130 of fine coagulated solids less than 1 mm thick. The belt surface 46 being thus covered improves the filtering capacity of the belt 44.

Belt perforations 56, seen in Figure 3, are sized to enable the passage of clear water 58 therethrough while retaining fine solids 60 in the microcake 130 on the surface 46 for subsequent discharge at a second location 62, seen in detail in FIGURE 4, positioned in this embodiment underneath the first location 48.

A water collection trough 64 is provided under the first location 48, for water 58 passing through the belt perforations 56. Three moderately-sized idler pulleys 66 are shown in Figure 1, which determine the belt path of travel. Where large diameter pulleys (not shown) are to be used, one idler pulley will suffice.

A solids collection bin 68 is provided under the second location 62, for collection of microcake 130 falling off the belt 44.

Figure 3 shows an enlarged view of one of the belt perforations 56 as it appears when the belt is in the first location 48. As seen, the entrance 70 to the perforation 56 is somewhat reduced on the side of the surface 46 due to belt sag, thus inhibiting the passage of a solid particle 60 which is about the same diameter as perforation 56. This configuration should be compared to that seen in Figure 4, where, in the second location, any belt sag tends to open the perforation entrance 70, which now faces downwards. Consequently, a solid particle 60 previously trapped in the entrance 70 to the perforation will tend to be released at second location 62.

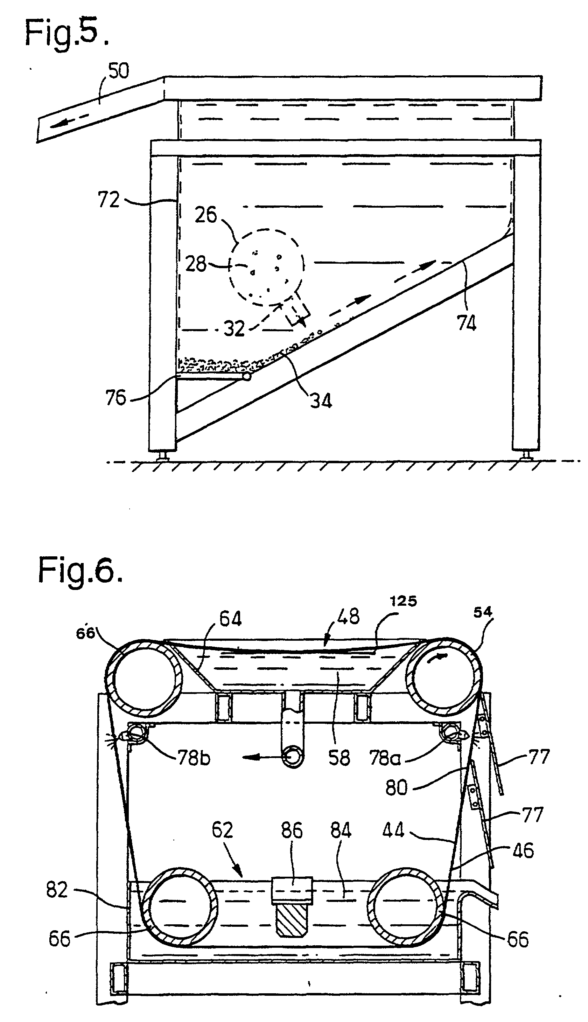

Further means for removing waste solid particles from belt 44 will be described below with reference to Figure 6.

Referring again to Figure 2, the body of water 122 has a depth, measured at its area of greatest depression, of between 2 cm and 10 cm. The thickness of the microcake is advantageously maintained in the range of 0.04 to 0.06 mm.

Referring now to Figure 5, there is seen a preferred embodiment of a second tank 72, which has the form of an inverted, truncated triangular prism. Tank 72 receives the mixture 28 from a long distributor outlet 32 fitted to the end of outlet pipe 26, whereby flow velocity is reduced to prevent disturbing the settling operation taking place in tank 72. The distributor outlet 32 is arranged to discharge in the direction of one of the lower sloping walls 74. Water inside tank 72 flows slowly upwards along wall 74, and larger solids 34, which have been acted on by the coagulant 20, slide downwards towards the door 76.

Figure 6 shows a preferred embodiment of a perforated belt 44, provided with cleaning means. Two scrapers 77 are in contact with the belt 44 to remove waste solids from the surface 46. A row of spray jets 78a is positioned to spray a fluid, air stream or water, at the inner face 80 of belt 44 for the removal of solids 60 from perforations 56, as seen in Figure 3. An optional, second- row of spray jets 78b is shown underneath the pulley 54. The jets 78b act to remove any solid particles which may still cling to the belt 44 after it has passed the second location 62. Jets 78a, 78b require considerable energy for their operation and are intended for use only under circumstances when the other means provided, such as the water bath 82, do not sufficiently clear the perforations.

Perforated belt 44 passes through a water bath 82 at the second location 62. Advantageously, the water 84 in the bath 82 is continuously changed. The water 84 may be heated and/or have a detergent added to increase its effectiveness.

At least one ultra-sonic wave generator 86 is immersed in the bath 82, to loosen solid particles from the perforations.

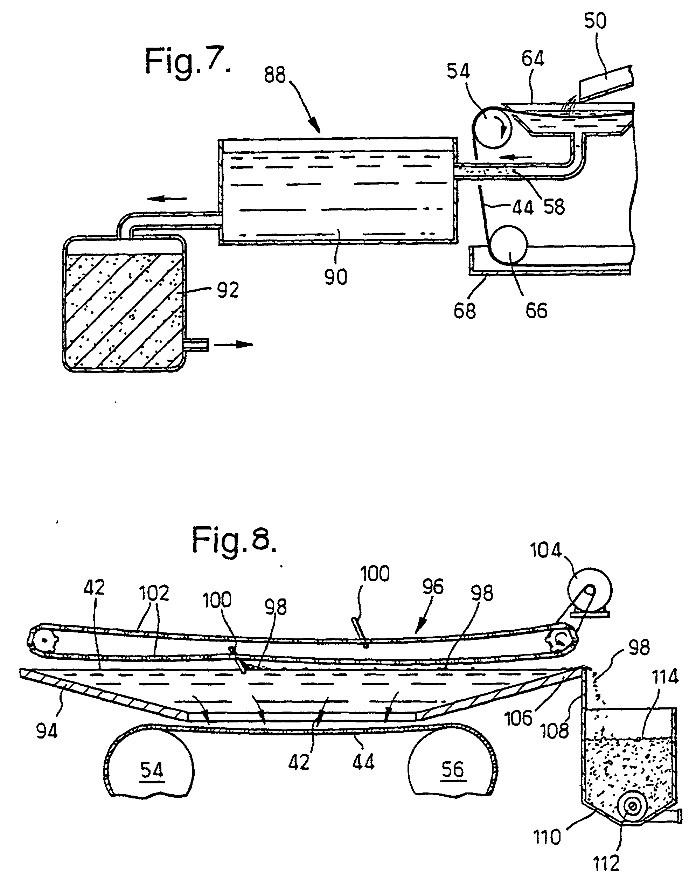

Figure 7 depicts a multi-stage apparatus 88 for continuous waste water filtration, similar to apparatus 10 but arranged to produce water of improved quality, for example, water for the irrigation of crops for human consumption. Apparatus 88 is further provided with a settling tank 90, arranged to receive water 58 previously filtered by perforated belt 44. Where water of still better quality is needed, such as that required for domestic use, water previously filtered by the settling tank 90 is pumped into a fine sand filter 92. As almost all contaminating solids have been previously removed, filter 92 may be used for an extended period of time without needing replacement.

Figure 8 is a diagrammatic view of a second tank 94, provided with a skimmer device 96 for removing floating, suspended solids 98 from the surface of water 42 contained therein.

Skimmer device 96 is suspended above the tank 94, and comprises at least one floating sludge skimmer blade 100, which is partially immersed in the water 42 and is driven in a horizontal direction by means of a chain 102, which in turn is driven by an electric drive unit 104. In the embodiment shown, the drive unit 104 operates continuously in the same direction and has several skimmer blades 100, which move floating solids 98 over a weir blade 106 and over the wall 106 of tank 94 into sludge pan 110.

In a further embodiment (not shown), the drive unit is arranged to reciprocate the chain, reciprocation control being achieved by limit switches positioned near the walls of the tank.

A sludge pump 112, such as the screw conveyor shown, transfers the accumulated sludge 114 from sludge pan 110 to further processing.

Skimmer device 96 greatly reduces the load of solids on the continuously-driven, perforated belt 44, which receives a stream of discharged, partially cleared water 42 from the second tank 94. Thereby, the perforated belt 44 has an increased water throughput and the belt 44 is easier to keep clean.

The invention also provides a method for continuous waste water filtration, comprising the following steps:
(a) feeding waste water containing suspended solids into a first tank;
(b) adding a coagulant to said waste water;
(c) mixing the coagulant into said waste water;
(d) feeding the resultant mixture into a sloped-bottom second tank;
(e) periodically discharging accumulated solids from said second tank by opening a lower door therein;
(f) arranging the partially-cleared water to overflow an upper weir of said second tank, so as to fall onto a perforated moving belt to achieve filtering;
(g) collecting water which has been filtered by said moving belt; and
(h) removing solid particles from the surface and perforations of said moving belt.

## Claims

1. A multi-stage apparatus for continuous waste water filtration, comprising:
a first tank provided with a waste water inlet pipe to supply waste water containing suspended solids to said tank, means for adding a coagulant to said waste water and an outlet pipe;
a second tank receiving said mixture of waste water and coagulant from the outlet pipe, said second tank being sufficiently large to allow larger suspended solids to settle and being provided with a lower, openable port for discharge of said settled solids and having an upper weir for discharge of partially-cleared water;
a continuously-driven, non-taut perforated belt, having a surface positioned to receive, at a first location, a stream of said discharged, partially-cleared water, the belt perforations being sized to enable the passage of clear water therethrough while retaining fine and coagulated solids on said surface for subsequent discharge at a second location, and said belt being non-taut to form a trough for retaining a body of water above the surface thereof;
a load sensor in contact with said belt to determine the combined weight of said belt and the water retained thereon and to control a motor of said belt and the speed thereof as a function of said weight, whereby a microcake of less than 1 mm thickness of fine and coagulated solids is formed and retained on the surface of said belt thereby improving the filtering capacity of said belt;
a water collection body being provided under said first location for water passing through said belt perforations, and a solids collection bin being provided at said second location, for collection of particles falling off said belt at said second location.

2. A multi-stage apparatus according to claim 1 wherein said body of water has a depth of between 2 cm and 10 cm at its area of greatest depression.

3. A multi-stage apparatus according to claim 1 or 2 wherein said microcake is maintained at a thickness of about 0.04 to 0.06 mm.

4. A multi-stage apparatus for continuous waste water filtration as claimed in any previous claim wherein said second tank has the form of an inverted truncated prism.

5. A multi-stage apparatus for continuous waste water filtration as claimed in any previous claim wherein at least one scraper for removing waste solids is in contact with said belt.

6. A multi-stage apparatus for continuous waste water filtration as claimed in any previous claim wherein at least one spray jet for spraying a fluid is positioned at said belt for the removal of waste solids therefrom.

7. A multi-stage apparatus for continuous waste water filtration as claimed in any previous claim wherein at least one spray jet for spraying compressed air is positioned at said belt for the removal of waste solids therefrom.

8. A multi-stage apparatus for continuous waste water filtration as claimed in any previous claim wherein at least one spray jet for spraying steam is positioned at said belt for the removal of waste solids therefrom.

9. A multi-stage apparatus for continuous waste water filtration as claimed in any previous claim wherein said perforated belt passes through a water bath at said second location.

10. A multi-stage apparatus for continuous waste water filtration as claimed on Claim 9, wherein the water in said water bath is continuously removed therefrom.

11. A multi-stage apparatus for continuous waste water filtration as claimed in Claim 9 or 10, wherein at least one ultra-sonic wave generator is immersed in said water bath.

12. A multi-stage apparatus for continuous waste water filtration as claimed in any previous claim wherein said second tank is further provided with a skimmer for removing floating, suspended solids from the surface of water contained therein.

13. A multi-stage apparatus for continuous waste water filtration as claimed in any previous claim wherein said coagulant is added into said first tank by a metering pump, said first tank further comprising an impeller immersed in said waste water.

14. A multi-stage apparatus for continuous waste water filtration as claimed in any previous claim further comprising a settling tank arranged to receive water previously filtered by said belt.

15. A multi-stage apparatus for continuous waste water filtration as claimed in claim 14, further comprising a fine sand filter receiving water previously settled by said settling tank.

16. A method for continuous waste water filtration, comprising the following steps:
(a) feeding waste water containing suspended solids into a first tank;
(b) adding a coagulant to said waste water;
(c) mixing the coagulant into said waste water in said first tank;
(d) feeding the resultant mixture into a sloped-bottom second tank;
(e) periodically discharging accumulated solids from said second tank by opening a lower door therein;
(f) arranging the partially-cleared water to overflow an upper weir of said second tank, so as to fall onto a perforated continuously-driven, non-taut perforated belt, having a surface positioned to receive, at a first location, a stream of said discharged, partially-cleared water, the belt perforations being sized to enable the passage of clear water therethrough while retaining fine and coagulated solids on said surface for subsequent discharge at a second location, and said belt being non-taut to form a trough for retaining a body of water above the surface thereof;
(g) providing a load sensor in contact with said belt to determine the combined weight of said belt and the water retained thereon and to control a motor of said belt and the speed thereof as a function of said weight, whereby a microcake of less than 1 mm thickness of fine and coagulated solids is formed and retained on the surface of said belt thereby improving the filtering capacity of said belt;
(h) collecting water which has been filtered by said moving belt; and
(i) removing solid particles from the surface and perforations of said moving belt.

## Revendications

1. Dispositif à plusieurs étages pour la filtration continue d'eaux usées. comprenant:
une première cuve munie d'un tuyau d'arrivée d'eaux usées pour envoyer dans ladite cuve des eaux usées contenant des solides en suspension, un moyen pour ajouter un coagulant dans lesdites eaux usées, et un tuyau de sortie;
une seconde cuve recevant du tuyau de sortie ledit mélange d'eaux usées et de coagulant, ladite seconde cuve étant suffisamment grande pour permettre aux solides en suspension les plus gros de se déposer et comportant dans le bas un orifice pouvant s'ouvrir pour décharger lesdits solides déposés et ayant dans le haut un déversoir pour le déversement de l'eau partiellement filtrée;
une bande perforée non tendue, à entraînement continu, ayant une surface placée pour recevoir, en un premier emplacement, un courant de ladite eau déversée partiellement filtrée, les perforations de la bande ayant des dimensions permettant le passage d'eau filtrée à travers celles-ci tout en retenant sur ladite surface les solides en petites particules et les solides coagulés qui sont ensuite déchargés en un deuxième emplacement, et ladite bande étant non tendue pour former un ventre destiné à retenir une masse d'eau au-dessus de la surface de celle-ci;
un détecteur de charge au contact de ladite bande pour déterminer le poids combiné de ladite bande et de l'eau retenue sur celle-ci et pour commander un moteur de ladite bande et la vitesse de celui-ci en fonction dudit poids, grâce à quoi une micro-galette de moins de 1 mm d'épaisseur constituée par des solides en petites particules et des solides coagulés se forme et est retenue à la surface de ladite bande en améliorant de ce fait la capacité de filtration de ladite bande;
une bâche de récupération d'eau étant disposée sous ledit premier emplacement pour l'eau passant à travers lesdites perforations de la bande. et un bac de récupération de solides étant disposé audit second emplacement pour recueillir audit second emplacement les particules tombant de ladite bande.

2. Dispositif à plusieurs étages selon la revendication 1. dans lequel ladite bâche d'eau a une profondeur comprise entre 2 cm et 10 cm dans sa zone la plus creuse.

3. Dispositif à plusieurs étages selon la revendication 1 ou 2, dans lequel ladite micro-galette est maintenue à une épaisseur d'environ 0,04 à 0,06 mm.

4. Dispositif à plusieurs étages pour la filtration continue d'eaux usées selon l'une quelconque des revendications précédentes, dans lequel ladite seconde cuve se présente sous la forme d'un prisme tronqué inversé.

5. Dispositif à plusieurs étages pour la filtration continue d'eaux usées selon l'une quelconque des revendications précédentes, dans lequel au moins une racle servant à retirer des déchets solides est au contact de ladite bande.

6. Dispositif à plusieurs étages pour la filtration continue d'eaux usées selon l'une quelconque des revendications précédentes, dans lequel au moins une buse de pulvérisation servant à pulvériser un fluide est placée au niveau de ladite bande pour retirer de celle-ci des déchets solides.

7. Dispositif à plusieurs étages pour la filtration continue d'eaux usées selon l'une quelconque des revendications précédentes, dans lequel au moins une buse de pulvérisation servant à pulvériser de l'air comprimé est placée au niveau de ladite bande pour évacuer des déchets solides depuis celle-ci.

8. Dispositif à plusieurs étages pour la filtration continue d'eaux usées selon l'une quelconque des revendications précédentes, dans lequel au moins une buse de pulvérisation servant à pulvériser de la vapeur est placée au niveau de ladite bande pour évacuer des déchets solides depuis celle-ci.

9. Dispositif à plusieurs étages pour la filtration continue d'eaux usées selon l'une quelconque des revendications précédentes, dans lequel ladite bande perforée traverse un bain d'eau audit second emplacement.

10. Dispositif à plusieurs étages pour la filtration continue d'eaux usées selon la revendication 9, dans lequel l'eau présente dans ledit bain d'eau est continuellement évacuée de celui-ci.

11. Dispositif à plusieurs étages pour la filtration continue d'eaux usées selon la revendication 9 ou 10, dans lequel au moins un générateur d'ultrasons est plongé dans ledit bain d'eau.

12. Dispositif à plusieurs étages pour la filtration continue d'eaux usées selon l'une quelconque des revendications précédentes, dans lequel ladite seconde cuve comporte en outre un écumeur pour retirer les solides en suspension flottant à la surface de l'eau contenue dans celle-ci.

13. Dispositif à plusieurs étages pour la filtration continue d'eaux usées selon l'une quelconque des revendications précédentes, dans lequel ledit coagulant est ajouté dans ladite première cuve par une pompe doseuse, ladite première cuve comportant en outre une hélice immergée dans lesdites eaux usées.

14. Dispositif à plusieurs étages pour la filtration continue d'eaux usées selon l'une quelconque des revendications précédentes, comprenant en outre un bassin de décantation conçu pour recevoir de l'eau préalablement filtrée par ladite bande.

15. Dispositif à plusieurs étages pour la filtration continue d'eaux usées selon la revendication 14, comprenant en outre un filtre à sable fin recevant de l'eau préalablement décantée dans ledit bassin de décantation.

16. Procédé pour la filtration continue d'eaux usées, comprenant les étapes consistant à:
(a) envoyer dans une première cuve des eaux usées contenant des solides en suspension;
(b) ajouter un coagulant dans lesdites eaux usées;
(c) mélanger le coagulant avec lesdites eaux usées dans ladite première cuve;
(d) envoyer le mélange obtenu dans une seconde cuve à fond incliné;
(e) décharger périodiquement les solides accumulés dans ladite seconde cuve en ouvrant une trappe dans le bas de celle-ci;
(f) amener l'eau partiellement filtrée à passer par-dessus un déversoir dans le haut de ladite deuxième cuve afin qu'elle tombe sur une bande perforée non tendue, à entraînement continu, ayant une surface placée pour recevoir, en un premier emplacement. un courant de ladite eau déversée partiellement épurée, les dimensions des perforations de la bande permettant le passage d'eau filtrée à travers les perforations tout en retenant sur ladite surface les solides en petites particules et les solides coagulés avant leur déchargement en un second emplacement, et ladite bande étant non tendue pour former un ventre servant à retenir une masse d'eau au-dessus de la surface de celle-ci;
(g) placer un détecteur de charge au contact de ladite bande pour déterminer le poids combiné de ladite bande et de l'eau retenue sur celle-ci et pour commander un moteur de ladite bande et la vitesse de celle-ci en fonction dudit poids, à la suite de quoi une micro-galette de moins de 1 mm d'épaisseur, composée de solides en particules fines et de solides coagulés, se forme et est retenue à la surface de ladite bande, ce qui améliore la capacité de filtration de ladite bande;
(h) recueillir l'eau qui a été filtrée par ladite bande mobile; et
(i) évacuer les particules de matières solides de la surface et des perforations de ladite bande mobile.

## Patentansprüche

1. Mehrstufiger Apparat für die kontinuierliche Abwasserfiltration, mit:
- einem ersten Tank, der mit einem Abwassereinlassrohr versehen ist, um dem Tank Abwasser zuzuführen, das suspendierte Feststoffe enthält, einer Einrichtung zum Zusetzen eines Koagulierungsmittels zum Abwasser und einem Auslassrohr,
- einem zweiten Tank, der das Gemisch aus Abwasser und Koagulierungsmittel aus dem Auslassrohr aufnimmt, wobei der zweite Tank ausreichend groß ist, um es größeren suspendierten Feststoffen zu gestatten, sich abzusetzen, und mit einer unteren Öffnung versehen ist, die geöffnet werden kann, um die abgesetzten Feststoffe abzuführen, und ein oberes Wehr aufweist, um teilgeklärtes Wasser abzuführen;
- einem kontinuierlich angetriebenen, nicht straffen, perforierten Riemen, mit einer Oberfläche, die so positioniert ist, dass sie an einer ersten Stelle eine Strömung des abgeführten, teilgeklärten Wassers aufnimmt, wobei die Riemenperforierungen so bemessen sind, dass sie den Durchgang des klaren Wassers gestatten, während feine und koagulierte Feststoffe auf der Oberfläche zur späteren Abführung an einer zweiten Stelle gehalten werden, und wobei der Riemen nicht straff ist, um eine Mulde auszubilden, um eine Wassermenge über seiner Oberfläche zu halten;
- einem Lastsensor in Kontakt mit dem Riemen, um das gemeinsame Gewicht des Riemens und des darauf gehaltenen Wassers zu bestimmen, und um einen Motor für den Riemen und dessen Drehzahl als eine Funktion des Gewichtes zu steuern, wodurch ein Mikrokuchen von weniger als 1 mm Dicke aus feinen und koagulierten Feststoffen auf der Oberfläche des Riemens ausgebildet und gehalten wird, um dadurch die Filterkapazität des Riemens zu verbessern;
- einen Wassersammelkörper, der unter der ersten Stelle angeordnet ist, für das Wasser, dass durch die Riemenperforierungen hindurchgeht, und einen Feststoffsammelbehälter, der an der zweiten Stelle vorgesehen ist, um Partikel zu sammeln, die an der zweiten Stelle von dem Riemen herabfallen.

2. Mehrstufiger Apparat gemäß Anspruch 1, bei dem die Wassermenge im Bereich der größten Vertiefung eine Tiefe zwischen 2 cm und 10 cm hat.

3. Mehrstufiger Apparat nach Anspruch 1 oder 2, bei dem der Mikrokuchen bei einer Dicke von ungefähr 0,04 bis 0,06 mm gehalten wird,

4. Mehrstufiger Apparat für die kontinuierliche Abwasserfiltration nach einem der vorhergehenden Ansprüche, bei dem der zweite Tank die Form eines umgekehrten Prismenstumpfes hat.

5. Mehrstufiger Apparat für die kontinuierliche Abwasserfiltration nach einern der vorhergehenden Ansprüche, bei dem mindestens ein Abstreifer zur Entfernung von Feststoffabfällen in Kontakt mit dem Riemen ist.

6. Mehrstufiger Apparat für die kontinuierliche Abwasserfiltration nach einem der vorhergehenden Ansprüche, bei dem mindestens eine Sprühdüse zum Sprühen eines Fluides an dem Riemen positioniert ist, um Feststoffabfälle von diesem zu entfernen.

7. Mehrstufiger Apparat für die kontinuierliche Abwasserfiltration nach einem der vorhergehenden Ansprüche, bei dem mindestens eine Sprühdüse zum Sprühen von komprimierter Luft an dem Riemen positioniert ist, um Feststoffabfälle von diesem zu entfernen.

8. Mehrstufiger Apparat für die kontinuierliche Abwasserfiltration nach einem der vorhergehenden Ansprüche, bei dem mindestens eine Sprühdüse zum Sprühen von Dampf an dem Riemen positioniert ist, um Feststoffabfälle von diesem zu entfernen.

9. Mehrstufiger Apparat für die kontinuierliche Abwasserfiltration nach einem der vorhergehenden Ansprüche, bei dem der perforierte Riemen an der zweiten Stelle durch ein Wasserbad hindurchgeht.

10. Mehrstufiger Apparat für die kontinuierliche Abwasserfiltration nach Anspruch 9, bei dem das Wasser in dem Wasserbad kontinuierlich aus diesem entfernt wird.

11. Mehrstufiger Apparat für die kontinuierliche Abwasserfiltration nach Anspruch 9 oder 10, bei dem mindestens ein Ultraschallwellengenerator in das Wasserbad eingetaucht ist.

12. Mehrstufiger Apparat für die kontinuierliche Abwasserfiltration nach einem der vorhergehenden Ansprüche, bei dem der zweite Tank ferner mit einem Abschäumer bzw. Skimmer versehen ist, um schwimmende, suspendierte Feststoffe von der Oberfläche des darin enthaltenen Wasser zu entfernen.

13. Mehrstufiger Apparat für die kontinuierliche Abwasserfiltration nach einem der vorhergehenden Ansprüche, bei dem das Koagulierungsmittel durch eine Dosierpumpe in den ersten Tank zugesetzt wird, wobei der erste Tank ferner ein in das Abwasser eingetauchtes Rührwerk umfasst.

14. Mehrstufiger Apparat für die kontinuierliche Abwasserfiltration nach einem der vorhergehenden Ansprüche, welcher ferner einen Absetztank umfasst, der angeordnet ist, um Wasser aufzunehmen, das vorher durch den Riemen gefiltert worden ist.

15. Mehrstufiger Apparat für die kontinuierliche Abwasserfiltration nach Anspruch 14, welcher ferner einen Feinsandfilter umfasst, der Wasser aufnimmt, das sich vorher in dem Absetztank abgesetzt hat.

16. Verfahren zur kontinuierlichen Abwasserfiltration mit den folgenden Schritten:
a) Zuführen von Abwasser, das suspendierte Feststoffe enthält, in einen ersten Tank;
b) Zusetzen eines Koagulierungsmittels zum Abwasser;
c) Einmischen des Koagulierungsmittels in das Abwasser in dem ersten Tank;
d) Zuführen des resultierenden Gemisches in einen zweiten Tank mit geneigtem Boden;
e) periodisches Abführen von angesammelten Feststoffen aus dem zweiten Tank durch das Öffnen einer unteren Tür darin;
f) Anordnen des teilgeklärten Wassers, so dass es ein oberes Wehr des zweiten Tanks überströmt, um so auf einen perforierten, kontinuierlich angetriebenen, nicht straffen perforierten Riemen zu fallen, der eine Oberfläche hat, die so positioniert ist, dass sie an einer ersten Stelle eine Strömung des abgeführten, teilgeklärten Wassers aufnimmt, wobei die Riemenperforierungen so bemessen sind, dass sie den Durchgang von klarem Wasser ermöglichen, während feine und koagulierte Feststoffe auf der Oberfläche zurückbehalten werden, zur späteren Abführung an einer zweiten Stelle, und wobei der Riemen nicht straff ist, um eine Mulde auszubilden, um eine Wassermenge über seiner Oberfläche zu halten;
g) Bereitstellen eines Lastsensors in Kontakt mit dem Riemen, um das gemeinsame Gewicht des Riemens und des darauf zurückgehaltenen Wassers zu bestimmen und einen Motor für den Riemen und dessen Drehzahl als eine Funktion des Gewichts zu steuern, wodurch ein Mikrokuchen von weniger als 1 mm Dicke aus feinen und koagulierten Feststoffen auf der Oberfläche des Riemens ausgebildet und gehalten wird, um dadurch die Filterkapazität des Riemens zu verbessern;
h) Sammeln von Wasser, welches durch den sich bewegenden Riemen gefiltert worden ist; und
i) Entfernen von Feststoffpartikeln von der Oberfläche und den Perforierungen des sich bewegenden Riemens.
